# EUROPÄISCHE PATENTANMELDUNG

(11) **EP 2 933 432 A1**
(43) Veröffentlichungstag der Anmeldung: **21.10.2015**
(21) Anmeldenummer: 14164716.4
(22) Anmeldetag: 15.04.2014
(51) Int. Cl.: F01D 5/02, F01D 5/06, F16D 1/08, F04D 29/26

(54) **Rotor mit axial gesichertem Stützring**

(71) Anmelder: Siemens Aktiengesellschaft, 80333 München (DE)
(72) Erfinder: Kolk, Karsten, 45479 Mülheim a.d. Ruhr (DE); Schröder, Peter, 45307 Essen (DE); Veitsman, Vyacheslav, 45879 Gelsenkirchen (DE)

(57) **Zusammenfassung**

Die Erfindung betrifft einen Rotor (1), insbesondere Gasturbinenläufer, mit mehreren jeweils eine axiale Durchgangsöffnung (2) aufweisenden Rotorscheiben (3), die über zumindest einen sich durch die Durchgangsöffnungen (2) erstreckenden Zuganker (5) axial verspannt und zu zumindest einer Rotorscheibeneinheit (7, 8) zusammengefasst sind, wobei am Außendurchmesser des Zugankers (5) zumindest ein Stützring (11) anliegt, der mit einer der Rotorscheiben (3) in Eingriff ist und über den sich der Zuganker (5) an der Rotorscheibe (3) abstützt, und wobei zur axialen Sicherung des zumindest einen Stützrings (11) wenigstens ein Sicherungselement (14) vorgesehen ist, dadurch gekennzeichnet, dass das Sicherungselement (14) an derjenigen Rotorscheibe (3) befestigt ist, mit welcher der Stützring (11) verbunden ist, und derart ausgebildet ist, dass es eine von der Rotorscheibe (3) weg weisende Stirnfläche (15) des Stützrings (11) umgreift.

## Beschreibung

Die vorliegende Erfindung betrifft einen Rotor, insbesondere einen Gasturbinenläufer, mit mehreren jeweils eine axiale Durchgangsöffnung aufweisenden Rotorscheiben, die über zumindest einen sich durch die Durchgangsöffnungen erstreckenden Zuganker axial verspannt und zu zumindest einer Rotorscheibeneinheit zusammengefasst sind, wobei am Außendurchmesser des Zugankers zumindest ein Stützring anliegt, der mit einer der Rotorscheiben in Eingriff ist und über den sich der Zuganker an der Rotorscheibe abstützt, und wobei zur axialen Sicherung des zumindest einen Stützrings wenigstens ein Sicherungselement vorgesehen ist.

Derartige Rotoren, die aus einer Vielzahl einzelner Rotorscheiben unter Bildung einer oder mehrerer Rotorscheibeneinheiten zusammengesetzt sind, sind im Stand der Technik in unterschiedlichsten Ausgestaltungen bekannt. Die Rotorscheiben jeder Rotorscheibeneinheit werden über den Zuganker flächig aneinander gepresst, wobei die Presskraft normalerweise durch endseitig auf den Zuganker aufgeschraubte Schraubenmuttern erzeugt wird. Meist werden unmittelbar benachbart angeordnete Rotorscheiben zusätzlich über einen Formschluss miteinander verbunden und zentriert. Ein solcher Formschluss kann beispielsweise über eine sogenannte Hirth-Verzahnung gebildet werden.

Während des Betriebs des Rotors ist dieser Schwingungen ausgesetzt, deren Frequenz unter anderem von der freischwingenden Länge des Zugankers abhängig ist. Mit zunehmender Baulänge eines Rotors nimmt auch die freischwingende Länge des Zugankers zu, was dazu führt, dass sich dessen Eigenfrequenz auf ein niedrigeres Niveau nahe der Rotationsfrequenz des Rotors verschiebt. Eine solche Frequenzverschiebung kann unzulässig hohe Schwingungsamplituden nach sich ziehen, welche die Funktion des Rotors beeinträchtigen und zu Schäden führen können.

Zur Verringerung der freischwingenden Länge des Zugankers ist es bereits bekannt, am Außendurchmesser des Zugankers zumindest einen Stützring anzubringen und mit einer der Rotorscheiben zu verbinden. Über einen derartigen Stützring kann sich der Zuganker an der entsprechenden Rotorscheibe abstützen. So schlägt beispielsweise die DE 2 643 886 einen Stützring in Form eines Stülprings mit sich aufweitendem Innendurchmesser vor, wobei der Stülpring mit seinem freien Ende größeren Innendurchmessers in eine an der zugeordneten Rotorscheibe vorgesehene Ringnut greift und sich mit dem kleinsten Innendurchmesser an dem Zuganker abstützt. Während des Betriebs wird aufgrund einer Fliehkraftdehnung der Rotorscheibe das mit der Rotorscheibe verbundene Ende des Stülprings derart aufgeweitet, dass der am Außenumfang des Zugankers anliegende Innendurchmesser des Stülprings endseitig gegen den Zuganker drückt, wodurch eine feste Verspannung zwischen der Rotorscheibe und dem Zuganker und damit die gewünschte Stützwirkung erzielt wird.

Um zu verhindern, dass sich ein Stützring axial entlang des Außenumfangs des Zugankers verschieben kann, ist es ferner bekannt, den Stützring durch ein zusätzliches Sicherungselement axial zu sichern. So schlägt die DE 2 643 886 beispielsweise die Verwendung einer Sicherungshülse vor, die zwischen dem Stützring und einer weiteren Rotorscheibe eingesetzt und zusammen mit den Rotorscheiben über den Zuganker verspannt wird. Ist eine weitere Rotorscheibe nicht vorhanden, so muss eine Dummy-Rotorscheibe zum Einsatz kommen, um die Sicherungshülse axial gegen den Stützring drücken zu können. Die Verwendung einer solchen Dummy-Rotorscheibe geht jedoch mit hohen Kosten einher, was nicht wünschenswert ist.

Ausgehend von diesem Stand der Technik ist es eine Aufgabe der vorliegenden Erfindung, einen alternativen Rotor der eingangs genannten Art zu schaffen.

Zur Lösung dieser Aufgabe schafft die vorliegende Erfindung einen Rotor der eingangs genannten Art, der dadurch gekennzeichnet ist, dass das Sicherungselement an derjenigen Rotorscheibe befestigt ist, mit welcher der Stützring in Eingriff ist, und derart ausgebildet ist, dass es eine von der Rotorscheibe weg weisende Stirnfläche des Stützrings umgreift. Erfindungsgemäß wird der Stützring in axialer Richtung also einerseits von der Rotorscheibe, mit der er verbunden ist, und andererseits von dem Sicherungselement eingefasst, das an derselben Rotorscheibe befestigt ist. Ein Verspannen des Sicherungselementes gegen den Stützring über den Zuganker ist somit nicht erforderlich. Entsprechend kann der Einsatz einer Dummy-Rotorscheibe entfallen, was zu einem einfachen und preiswerten Aufbau führt.

Gemäß einer Ausgestaltung der vorliegenden Erfindung weist der Stützring einen sich aufweitenden Innendurchmesser auf, wobei der Stützring mit seinem freien Ende größeren Innendurchmessers in eine an der zugeordneten Rotorscheibe vorgesehene Ringnut greift. Somit kann der erfindungsgemäße Stützring beispielsweise analog zu dem in der DE 26 43 886 offenbarten Stülpring ausgebildet sein.

Bevorzugt ist das Sicherungselement ringförmig ausgebildet. Entsprechend wird der Stützring entlang seines gesamten Umfangs axial gesichert.

Vorteilhaft ist das Sicherungselement einteilig ausgebildet, wodurch die Herstellungs- und Montagekosten gesenkt werden können.

Das Sicherungselement ist bevorzugt aus Metall hergestellt.

Gemäß einer Ausgestaltung der vorliegenden Erfindung weist das Sicherungselement im Querschnitt betrachtet einen an der zugeordneten Rotorscheibe anliegenden Befestigungsschenkel, einen die von der Rotorscheibe weg weisende Stirnfläche des Stützrings umgreifenden Sicherungsschenkel und einen den Befestigungsschenkel und den Sicherungsschenkel miteinander verbindenden Verbindungsschenkel auf. Auf diese Weise wird ein sehr einfacher Aufbau erzielt.

Das Sicherungselement ist bevorzugt mittels Schrauben an der zugeordneten Rotorscheibe befestigt, die vorteilhaft mit einer Verliersicherung versehen sind. So können die Schrauben beispielsweise verstemmt sein.

Gemäß einer Ausgestaltung der vorliegenden Erfindung ist das Sicherungselement mittels einer Bajonettverbindung an einer zugeordneten Rotorscheibe befestigt. Eine derartige Bajonettverbindung ermöglicht eine einfache Montage und Demontage des Sicherungselementes an der entsprechenden Rotorscheibe.

Bevorzugt weist das Sicherungselement entlang seines Umfangs verteilt radial vorstehende Bajonettvorsprünge auf, die in eine an der zugeordneten Rotorscheibe vorgesehene ringförmige Bajonettnut greifen, die mit korrespondierend zu den Bajonettvorsprüngen ausgebildeten Bajonettvorsprungaufnahmeöffnungen versehen ist, die ein axiales Einsetzen der Bajonettvorsprünge in die Bajonettnut ermöglichen. Entsprechend kann die Rotorscheibe einfach axial in die Bajonettnut der Rotorscheibe eingeführt und durch Verdrehen befestigt werden.

Vorteilhaft ist das Sicherungselement unter Verwendung zumindest eines Sicherungsstiftes gegen Verdrehen gesichert. Auf diese Weise wird ein versehentliches Lösen der Bajonettverbindung sicher verhindert.

Ferner betrifft die vorliegende Erfindung die Verwendung eines Sicherungselementes zur axialen Sicherung eines Stützrings eines erfindungsgemäßen Rotors.

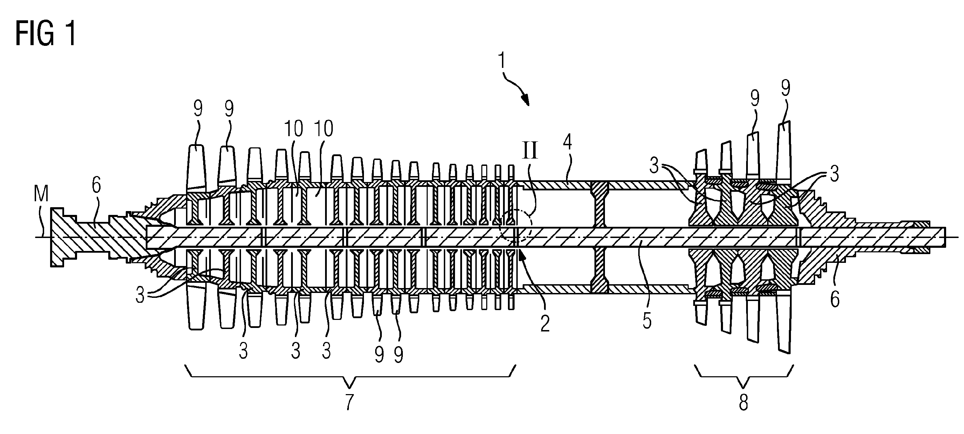

Weitere Merkmale und Vorteile der vorliegenden Erfindung werden anhand der nachfolgenden Beschreibung eines Rotors gemäß einer Ausführungsform der vorliegenden Erfindung unter Bezugnahme auf die beiliegende Zeichnung deutlich. Darin ist
- Figur 1: eine schematische Ansicht eines Rotors gemäß der vorliegenden Erfindung;
- Figur 2: eine vergrößerte Ansicht des in Figur 1 mit dem Bezugszeichen II gekennzeichneten Ausschnitts, die eine Anordnung gemäß einer ersten Ausführungsform der vorliegenden Erfindung zeigt;
- Figur 3: eine perspektivische Ansicht einer Rotorscheibe gemäß einer zweiten Ausführungsform der vorliegenden Erfindung;
- Figur 4: eine perspektivische Ansicht eines Sicherungselements gemäß der zweiten Ausführungsform der vorliegenden Erfindung; und
- Figur 5: eine perspektivisch vergrößerte Ansicht des in Figur 1 mit dem Bezugszeichen II gekennzeichneten Ausschnitts, die eine Anordnung gemäß der zweiten Ausführungsform der vorliegenden Erfindung zeigt.

Der Rotor 1, der vorliegend einen Gasturbinenläufer bildet, umfasst eine Vielzahl von jeweils eine axiale Durchgangsöffnung 2 aufweisenden Rotorscheiben 3, eine Hohlwelle 4 und einen sich durch die Durchgangsöffnungen 2 und die Hohlwelle 3 erstreckenden Zuganker 5, über den die Rotorscheiben 3 und die Hohlwelle 4 in bekannter Weise unter Verwendung endseitig auf den Zuganker 5 aufgeschraubter Spannteile 6 axial verspannt sind. Dabei sind die Rotorscheiben 3 zu einer verdichterseitigen Rotorscheibeneinheit 7 und einer turbinenseitigen Rotorscheibeneinheit 8 zusammengefasst, wobei die Hohlwelle 4 zwischen den beiden Rotorscheibeneinheiten 7 und 8 angeordnet ist. Die zueinander gewandten Stirnflächen unmittelbar benachbart angeordneter Rotorscheiben 3 sind jeweils mit einer nicht näher dargestellten Hirth-Verzahnung versehen, wodurch neben der Verspannung durch den Zuganker 5 auch eine formschlüssige Verbindung zwischen den entsprechenden Rotorscheiben 3 sowie eine Zentrierung bezüglich der Mittelachse M des Rotors 1 erzielt wird. Am Außenumfang der jeweiligen Rotorscheiben 3 sind Laufschaufeln 9 angeordnet. Zwischen den Rotorscheiben 3 vorhandene Ausnehmungen 10 dienen zur Führung eines Kühlmediums zum Kühlen der Rotorscheiben 3, indem Kühlluft über einen zwischen dem Zuganker 5 und den Rotorscheiben 3 bzw. der Hohlwelle 4 gebildeten Kühlkanal zugeführt wird.

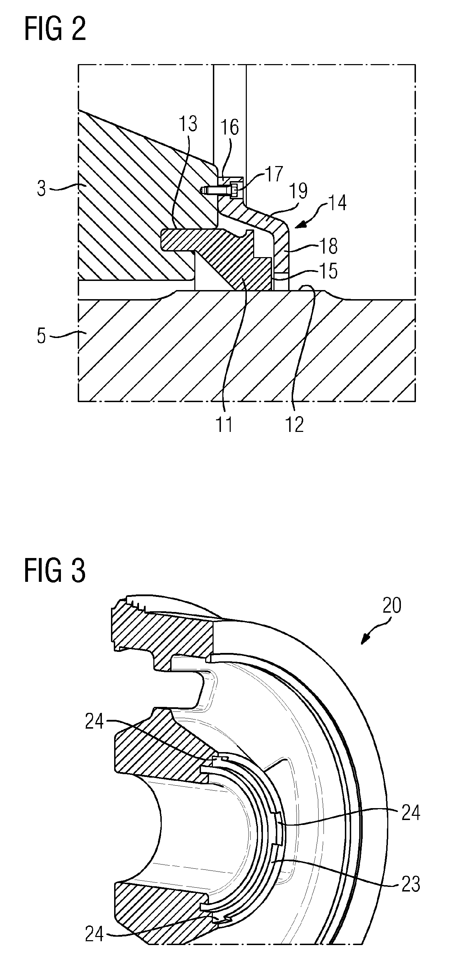

Aufgrund der großen Länge des Zugankers 5 liegen an dessen Außendurchmesser mehrere Stützringe 11 an, die, wie es in Figur 2 dargestellt ist, jeweils mit einer der Rotorscheiben 3 derart in Eingriff sind, dass sich der Zuganker 5 über die Stützringe 11 an den entsprechenden Rotorscheiben 3 abstützt. Jeder der Stützringe 11 ist auf einem Absatz 12 des Zugankers 5 angeordnet und weist einen sich aufweitenden Innendurchmesser auf, wobei jeweils das freie Ende mit dem größeren Innendurchmesser in eine an der benachbart angeordneten Rotorscheibe 3 vorgesehene Ringnut 13 greift. Zur axialen Sicherung der Stützringe 11 sind Sicherungselemente 14 vorgesehen, die jeweils an derjenigen Rotorscheibe 3 befestigt sind, an der auch der zugeordnete Stützring 11 angreift. Die Sicherungselemente 14 sind derart ausgebildet, dass sie eine von der zugeordneten Rotorscheibe 3 weg weisende Stirnfläche 15 des zugeordneten Stützrings 11 umgreifen. Jedes Sicherungselement 14 ist einteilig aus Metall hergestellt und ringförmig ausgebildet. Im Querschnitt betrachtet umfasst jedes Sicherungselement 14 einen an der zugeordneten Rotorscheibe 3 anliegenden Befestigungsschenkel 16, der mittels verliersicher ausgeführten Schrauben 17 an der zugeordneten Rotorscheibe 3 befestigt ist, einen die von der Rotorscheibe 3 weg weisende Stirnfläche 15 des zugeordneten Stützrings 11 umgreifenden Sicherungsschenkel 18 und einen den Befestigungsschenkel 16 und den Sicherungsschenkel 18 miteinander verbindenden Verbindungsschenkel 19.

Während des Betriebs werden aufgrund einer Fliehkraftdehnung derjenigen Rotorscheiben 3, mit denen ein Stützring 11 in Eingriff ist, die jeweils in einer der Ringnuten 13 aufgenommenen freien Enden der Stützringe 11 derart aufgeweitet, dass die am Außenumfang des Zugankers 5 anliegenden Innendurchmesser der Stützringe 11 endseitig gegen den Zuganker 5 drücken, wodurch eine feste Verspannung zwischen den entsprechenden Rotorscheiben 3 und dem Zuganker 5 und damit die gewünschte Stützwirkung erzielt wird. Dabei werden die Stützringe 11 axial durch die zugeordneten Sicherungselemente 14 gesichert.

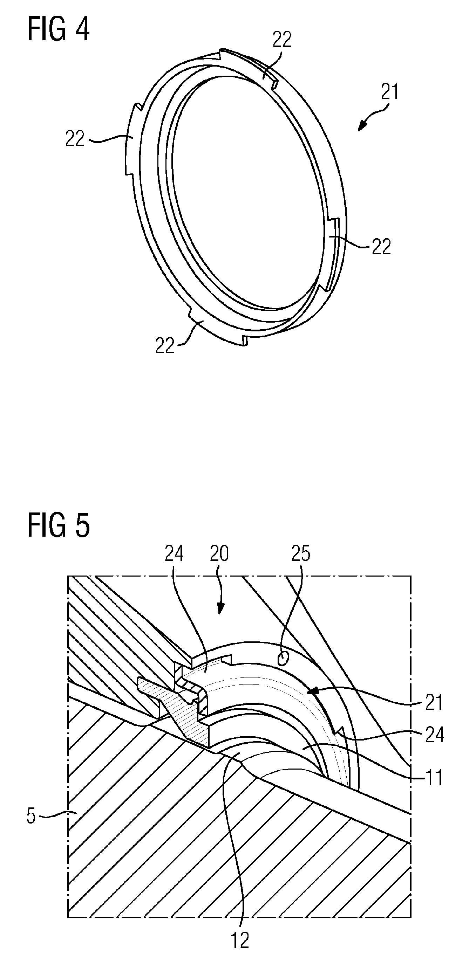

Die Figuren 3 bis 5 zeigen eine alternative Ausgestaltung einer Rotorscheibe 20 und eines Sicherungselementes 21 einer Anordnung gemäß einer zweiten Ausführungsform der vorliegenden Erfindung, die anstelle der in Figur 2 dargestellten Anordnung verwendet werden kann. Bei der in Figur 5 dargestellten Anordnung ist der Stützring 11 axial durch das Sicherungselement 21 gesichert, das wiederum mittels einer Bajonettverbindung an der Rotorscheibe 20 befestigt ist. Zur Realisierung der Bajonettverbindung weist das Sicherungselement 21, das im Übrigen analog zum Sicherungselement 14 der ersten Ausführungsform ausgebildet ist, entlang seines Umfangs verteilt radial vorstehende Bajonettvorsprünge 22 auf, die in eine an der zugeordneten Rotorscheibe 20 vorgesehene ringförmige Bajonettnut 23 greifen, die mit korrespondierend zu den Bajonettvorsprüngen 22 ausgebildeten Bajonettvorsprungaufnahmeöffnungen 24 versehen ist, die ein axiales Einsetzen der Bajonettvorsprünge 22 in die Bajonettnut 23 ermöglichen. Entsprechend kann das Sicherungselement 21 axial über den Stützring 11 geschoben werden, wobei die Bajonettvorsprünge 22 in die zugehörigen Bajonettvorsprungaufnahmeöffnungen 24 eingeführt werden, woraufhin die Bajonettvorsprünge 22 durch Verdrehen des Sicherungselementes 21 axial fixiert werden. Eine radiale Sicherung gegen Verdrehen ist vorliegend durch einen Sicherungsstift 25 realisiert, der in eine sich in axialer Richtung erstreckende Bohrung der Rotorscheibe 20 eingesetzt und in dieser verpresst ist.

Ein wesentlicher Vorteil der erfindungsgemäßen Sicherungselemente 14, 21 besteht darin, dass diese nicht über den Zuganker 5 gegen die zugehörigen Stützringe 11 verspannt werden, weshalb sich diese unabhängig von ihrer Position einfach und preiswert montieren lassen. Auch ein Nachrüsten ist ohne großen Aufwand möglich. Aufgrund ihres einfachen Aufbaus können die Sicherungselemente 14, 21 zudem kostengünstig gefertigt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Rotor (1), insbesondere Gasturbinenläufer, mit mehreren jeweils eine axiale Durchgangsöffnung (2) aufweisenden Rotorscheiben (3; 20), die über zumindest einen sich durch die Durchgangsöffnungen (2) erstreckenden Zuganker (5) axial verspannt und zu zumindest einer Rotorscheibeneinheit (7, 8) zusammengefasst sind,
wobei am Außendurchmesser des Zugankers (5) zumindest ein Stützring (11) anliegt, der mit einer der Rotorscheiben (3) in Eingriff ist und über den sich der Zuganker (5) an der Rotorscheibe (3; 20) abstützt, und
wobei zur axialen Sicherung des zumindest einen Stützrings (11) wenigstens ein Sicherungselement (14; 21) vorgesehen ist,
**dadurch gekennzeichnet, dass**
das Sicherungselement (14; 21) an derjenigen Rotorscheibe (3; 20) befestigt ist, mit welcher der Stützring (11) verbunden ist, und derart ausgebildet ist, dass es eine von der Rotorscheibe (3; 20) weg weisende Stirnfläche (15) des Stützrings (11) umgreift.

2. Rotor (1) nach Anspruch 1,
**dadurch gekennzeichnet, dass**
der Stützring (11) einen sich aufweitenden Innendurchmesser aufweist, und
dass der Stützring (11) mit seinem freien Ende größeren Innendurchmessers in eine an der zugeordneten Rotorscheibe (3; 20) vorgesehene Ringnut (13) greift.

3. Rotor (1) nach einem der vorhergehenden Ansprüche,
**dadurch gekennzeichnet, dass**
das Sicherungselement (14; 21) ringförmig ausgebildet ist.

4. Rotor (1) nach einem der vorhergehenden Ansprüche,
**dadurch gekennzeichnet, dass**
das Sicherungselement (14; 21) einteilig ausgebildet ist.

5. Rotor (1) nach einem der vorhergehenden Ansprüche,
**dadurch gekennzeichnet, dass**
das Sicherungselement (14; 21) aus Metall hergestellt ist.

6. Rotor (1) nach einem der vorhergehenden Ansprüche,
**dadurch gekennzeichnet, dass**
das Sicherungselement (14) im Querschnitt betrachtet einen an der zugeordneten Rotorscheibe (3) anliegenden Befestigungsschenkel (16), einen die von der Rotorscheibe (3; 20) weg weisende Stirnfläche (15) des Stützrings (11) umgreifenden Sicherungsschenkel (18) und einen den Befestigungsschenkel (16) und den Sicherungsschenkel (18) miteinander verbindenden Verbindungsschenkel (19) aufweist.

7. Rotor (1) nach einem der vorhergehenden Ansprüche,
**dadurch gekennzeichnet, dass**
das Sicherungselement (14) mittels Schrauben (17) an der zugeordneten Rotorscheibe (3) befestigt ist.

8. Rotor (1) nach einem der vorhergehenden Ansprüche,
**dadurch gekennzeichnet, dass**
die Schrauben (17) mit einer Verliersicherung versehen sind.

9. Rotor (1) nach einem der vorhergehenden Ansprüche,
**dadurch gekennzeichnet, dass**
das Sicherungselement (21) mittels einer Bajonettverbindung an der zugeordneten Rotorscheibe (20) befestigt ist.

10. Rotor (1) nach Anspruch 9,
**dadurch gekennzeichnet, dass**
das Sicherungselement (21) entlang seines Umfangs verteilt radial vorstehende Bajonettvorsprünge aufweist, die in eine an der zugeordneten Rotorscheibe (20) vorgesehene ringförmige Bajonettnut (23) greifen, die mit korrespondierend zu den Bajonettvorsprüngen (22) ausgebildeten Bajonettvorsprungaufnahmeöffnungen (24) versehen ist, die ein axiales Einsetzen der Bajonettvorsprünge (22) in die Bajonettnut (23) ermöglichen.

11. Rotor (1) nach Anspruch 9 oder 10,
**dadurch gekennzeichnet, dass**
das Sicherungselement (21) unter Verwendung zumindest eines Sicherungsstiftes (25) gegen Verdrehen gesichert ist.

12. Verwendung eines Sicherungselementes (14) zur axialen Sicherung eines Stützrings (11) eines Rotors (1) nach einem der vorhergehenden Ansprüche.
